# EUROPÄISCHE PATENTSCHRIFT

(11) **EP 1 514 975 B1**
(45) Veröffentlichungstag und Bekanntmachung des Hinweises auf die Patenterteilung: **26.07.2006**
(21) Anmeldenummer: 04450170.8
(22) Anmeldetag: 07.09.2004
(51) Int. Cl.: E04D 5/12, E02D 31/02

(54) **Bitumen-dichtungs- bzw.-isolierbahn**
Sealing or insulating sheeting made of bitumen
Bandes d'étanchéité ou bandes isolantes en bitume

(30) Priorität: 11.09.2003 AT 14362003
(43) Veröffentlichungstag der Anmeldung: 16.03.2005
(73) Patentinhaber: Unterreiter, Karl, 4813 Altmünster (AT)
(72) Erfinder: Unterreiter, Karl, 4813 Altmünster (AT)
(74) Vertreter: Ellmeyer, Wolfgang

(56) Entgegenhaltungen:
- EP-A- 1 382 768
- GB-A- 2 253 184
- US-A- 4 091 135
- US-A- 4 386 981
- US-A- 4 421 807

## Beschreibung

Die vorliegende Erfindung betrifft neue Dichtungs- bzw. Isolierbahnen aus (Polymer-) Bitumen, insbesondere zur Dachabdeckung und Verkleidung von Kelleraußenwänden, sowie Verfahren zur Herstellung solcher neuer Bahnen.

Gebäude bedürfen bekanntlich umfassender Abdichtung und Isolierung gegen äußere Einflüsse wie Nässe und Kälte. Solchen Einflüssen sind besonders Dächer und Keller, insbesondere Kelleraußenwände, ausgesetzt, weswegen hier üblicherweise eine Vielzahl von Dichtungs- und Isolierbahnen zum Einsatz kommt, wie z.B. Dampfsperren, Dampfbremsen, Wärmeisolierungen, Ausgleichslagen etc.

Als derartige Bahnen sind nach dem Stand der Technik ein- oder beidseitig klebende, d.h. selbstklebende oder thermisch (z.B. durch "Flämmen") aktivierbare, Dach-, Dichtungs- und Isolierbahnen aus Polymerbitumen ohne Einlagen (homogen) oder mit diversen Einlagen bzw. Armierungen, wie z.B. Aluminiumfolien, Glasgewebe, Glasgitter, Glasvlies, Kunststoffvliesen und Kombinationen dieser Stoffe, auf dem Gebiet allgemein bekannt.

Die klebende oder klebrig zu machende Oberfläche ("Klebefläche") ist dabei auf unterschiedliche Weise zu schützen, um die Bahnen z.B. in eingerolltem Zustand (Lieferform: Rollen) lagern und transportieren zu können. Als solcher Oberflächenschutz werden im Falle von selbstklebenden Folien häufig abziehbare Schutzabdeckungen, z.B. aus Kunststoff, Papier oder Stoff/Vlies, eingesetzt. Thermisch aktivierbare Klebeflächen werden beispielsweise mit nichtablösbaren Folien, Naturschieferplättchen, gefärbten Sandpartikeln, Feinsand und Talkum geschützt, die beim Verlegen der Bahnen auf der Klebefläche, d.h. an der Grenzfläche zwischen der Dichtungs- bzw. Isolierbahn und vorhergehenden und/oder nachfolgenden Lagen oder dem Untergrund, zurückbleiben. Wobei die nichtablösbaren Folien während einer Flämmbehandlung zur Aktivierung der Klebefläche bevorzugt schmelzen und die Haftwirkung der Klebefläche verstärken sollen.

Die US-A-4.386.981 offenbart wasserfeste Lagen aus bitumenhältigen Bahnen, die vor dem Verlegen eine Schutzabdeckung auf den Klebeflächen aufweisen. Die US-A-4.421.807 beschreibt ähnliche Bahnen, deren Schutzfolie aus mehreren Streifen besteht. Aus der GB-A-2.253.184 sind witterungsbeständige Kunststoffbahnen bekannt, die auf einer Seite eine Anzahl von Isolierplatten, z.B. aus Mineral-, Stein- oder Glaswolle, Schaumstoff, Schaumglas, Kork, Holzwollzement oder geschäumtem Perlit, aufweisen ("Klappbahnen").

In der US-A-4.091.135 werden Bahnen beschrieben, bei denen eine Bitumenschicht sowohl auf einen Träger als auch auf eine Schutzabdeckung in Form einer Abziehfolie aufgebracht ist und die beiden Schichten danach miteinander verbunden werden. Die zweite, auf die Schutzabdeckung aufgebrachte Bitumenschicht ist dabei stark klebrig und bildet nach vollständiger Entfernung der Abziehfolie eine Art von Selbstklebefläche beim Verlegen der Bahnen.

In der EP-A-1.382.768 des Erfinders der vorliegenden Erfindung werden verschiedene Ausführungsformen von Isolierbahnen mit Schutzabdeckungen beschrieben, die unter anderem in Form von teilüberlappenden Trennschichtbahnen ausgeführt sein können. Dadurch liegen die beiden überlappenden Teile der Schutzabdeckung lose aufeinander auf, haften aber nicht aneinander. Die Überlappung der Schutzabdeckungs-Teilbahnen dient vorwiegend der leichteren Greifbarkeit einer abzuziehenden Teilbahn beim Verlegen.

Die vorliegende Erfindung beschäftigt sich vorwiegend, aber nicht ausschließlich mit Dichtungs- bzw. Isolierbahnen des Typs mit einer thermisch aktivierbaren Klebefläche auf zumindest einer Bahnoberfläche, häufig auf beiden Oberflächen. Ausführungsformen solcher Bahnen nach dem Stand der Technik, die mit nichtablösbaren Folien gegen unerwünscht frühzeitiges Verkleben geschützt sind, weisen im praktischen Gebrauch erhebliche Nachteile auf.

Da häufig viele Stunden, manchmal auch Tage vergehen, bis auf die mit nichtablösbarer Folie geschützte Klebefläche die nächste Lage der Isolierung oder Dichtung aufgeklebt wird, ist die Folienoberfläche der Witterung ausgesetzt, d.h. sie kann verschmutzt und stark benässt werden. Zudem weisen diese Folien aufgrund ihrer geringen Dicke auch entsprechend geringe Festigkeit auf und reißen (im Falle von Dachisolierungen) beim Betreten leicht ein, wodurch die thermisch zu aktivierende Bitumenklebefläche freigelegt und in der Folge trotz anfänglichem Schutz kontaminiert wird.

Die vorliegende Erfindung hat zum Ziel, diese Problematik zu lösen und eine gegen Verschmutzung und Nässe gut geschützte Isolier- bzw. Dichtungsbahn bereitzustellen.

Dieses Ziel wird gemäß einem ersten Aspekt der Erfindung durch eine Dichtungs- bzw. Isolierbahn aus (Polymer-)Bitumen, insbesondere zur Dachabdeckung und Verkleidung von Kelleraußenwänden, mit zumindest einer auf zumindest einem Teil einer der Oberflächen der Bahn vorgesehenen Bitumen-Klebefläche, wobei die zumindest eine Klebefläche zumindest teilweise mit einer Schutzabdeckung für die Bitumenoberfläche versehen ist, erreicht, welche dadurch gekennzeichnet ist, dass die Schutzabdeckung in Form von zwei aneinander haftenden, durch Abziehen voneinander trennbaren horizontalen Lagen ausgeführt ist, wobei die auf der Klebefläche aufliegende erste Lage eine höhere Haftkraft an der Klebefläche als an der von der Klebefläche abgewandten zweiten Lage der Schutzabdeckung aufweist.

Ein derartiger erfindungsgemäßer Schutz der Klebefläche mit einer mehrlagigen Schutzabdeckung ermöglicht, dass die Klebefläche bis zur thermischen Aktivierung nicht nur durch eine nach dem Stand der Technik bekannte, relativ dünne und wenig reißfeste Folie, sondern zusätzlich durch eine vor dem Flämmen abziehbare, stabilere Schutzschicht gegen Verschmutzung, Nässe und Risse geschützt bleibt.

Die Haftung zwischen der ersten Lage und der Klebefläche sowie zwischen den beiden Lagen der Schutzabdeckung kann dabei durch materialbedingte Adhäsion und/oder durch einen dazwischenliegenden Kleber erzielt werden. Eine Kombination beider Möglichkeiten ist erfindungsgemäß somit auch vorgesehen, etwa durch Bereitstellung eines Laminats der beiden Lagen, die jeweils aus Kunststoff, Papier, Stoff und/oder Vliesmaterial bestehen können und mittels eines Klebers miteinander verklebt sind, während das Laminat als Ganzes alleine durch Adhäsionskraft an der Klebefläche der Isolier- bzw. Dichtungsbahn haften kann, oder auch umgekehrt.

Die erste Lage besteht vorzugsweise aus schmelzbarem Kunststoff, wie z.B. Polyethylen oder Polypropylen, kann aber auch eine sein, die bei der Flämmbehandlung durch Verbrennung bzw. Abdampfen entfernt wird. Wird ein Kleber zum Aufkleben der mehrlagigen Schutzabdeckung auf die Klebefläche der Bahn eingesetzt, so handelt es sich vorzugsweise ebenfalls um einen unter Wärmeeinwirkung schmelzbaren Klebstoff, d.h. einen Schmelzkleber, der ein herkömmlicherweise verwendeter sein kann, wie z.B. Ethylen-Ethylacrylat- oder Ethylen-Vinylacetat-Copolymere, Polyamide, Polyester, etc.

Wird nicht nur zum Aufkleben der mehrlagigen Schutzabdeckung auf die Klebefläche der Isolier- bzw. Dichtungsbahn, sondern auch zur Herbeiführung der Haftung zwischen den beiden Lagen ein Kleber eingesetzt, sind die beiden Klebstoffe so zu wählen, dass die Haftung an der Klebefläche größer als jene zwischen den beiden Lagen ist, wie zuvor beschrieben wurde.

In einer besonders bevorzugten Ausführungsform besteht die mehrlagige Schutzabdeckung aus zwei coextrudierten Kunststofffolien, die aufgrund von Adhäsion aneinander haften und so auf die Klebefläche aufgebracht werden. Die Haftung an der Klebefläche kann dabei wiederum über einen Kleber erfolgen oder ebenfalls auf Adhäsion beruhen.

Eine bevorzugte Ausführungsform sieht vor, dass die mehrlagige Schutzabdeckung über zumindest einen Längsrand der Bahn hinausragt, um die Schutzabdeckung beim Abziehen der zweiten (oberen) Lage besser fassen und die Lagen beispielsweise an einer Ecke voneinander trennen zu können. In bestimmten bevorzugten Ausführungsformen ragt die mehrlagige Schutzabdeckung an beiden Längsrändern über die zu schützende Klebefläche hinaus. Der Überstand beträgt dabei vorzugsweise zumindest 5 mm, noch bevorzugter zumindest 10 bis 20 mm.

In anderen bevorzugten Ausführungsformen schließt die erste Lage an beiden Längsrändern der Dichtungs- bzw. Isolierbahn mit selbiger im Wesentlichen bündig ab, während die zweite Lage darüber hinausragt, was die Trennung der beiden Lagen beim Abziehen der zweiten Lage weiter erleichtert.

Wenn die zweite Lage dabei um 50 bis 200 mm, vorzugsweise 80 bis 120 mm, insbesondere etwa 100 mm, über den Längsrand der Dichtungs- bzw. Isolierbahn übersteht, bringt dies weitere Vorteile beim Verlegen der Bahn mit sich. Das Verlegen der einzelnen Bahnen erfolgt nämlich üblicherweise überlappend; das bedeutet, dass gegebenenfalls ein Teil der zweiten Lage entlang eines Randes, speziell eines Längsrandes, mitunter aber auch an den Querrändern, entfernt werden muss, um einen Streifen der ersten Lage freizulegen, der dann z.B. einer Flämmbehandlung unterzogen wird, um mit der nachfolgenden Dichtungs- bzw. Isolierbahn verklebt zu werden. Die Breite der Überlappung beträgt dabei üblicherweise zumindest 50 mm, üblicherweise nicht mehr als 200 mm, häufig rund um etwa 100 mm, woraus sich der obige Bereich des Überstands der zweiten Lage ergibt.

Dadurch kann nämlich beim Verlegen jener Abschnitt der ersten Lage einer Bahn, der nach Entfernung eines Streifens der zweiten Lage im Bereich der späteren Überlappung freiliegt, durch den Überstand der nächsten Bahn vorübergehend gegen äußere Einflüsse geschützt werden, bevor und nachdem die beiden Bahnen miteinander verklebt werden.

Um das Verlegen der Bahnen weiter zu vereinfachen ist in bestimmten bevorzugten Ausführungsformen ein Abschnitt der ersten Lage der Schutzabdeckung, vorzugsweise zumindest ein Abschnitt an zumindest einem Rand, der Dichtungs- bzw. Isolierbahn nicht von der zweiten Lage bedeckt, um die zweite Lage in diesem Bereich gar nicht erst abziehen zu müssen und dennoch eine z.B. durch Flämmbehandlung aktivierbare, mit der ersten Lage geschützte Klebefläche zur Verfügung zu haben.

Speziell liegt die erste Lage dabei entlang eines Längsrands frei, kann aber auch entlang eines Querrands freiliegen, um das überlappende Verlegen auch an diesen Rändern zu erleichtern.

In besonders bevorzugten Ausführungsformen sind die beiden Lagen der Schutzabdeckung in Breiterichtung zueinander versetzt, so dass ein Abschnitt der ersten Lage entlang eines Längsrands der Dichtungs- bzw. Isolierbahn nicht von der zweiten Lage bedeckt ist, während die zweite Lage am gegenüberliegenden Längsrand der Dichtungs- bzw. Isolierbahn über diesen hinausragt. Auf diese Weise werden die obigen Vorteile zweier Ausführungsformen miteinander kombiniert.

Als Alternative zu - oder auch in Kombination mit - jenen Ausführungsformen, in denen ein Teil der ersten Lage freiliegt kann die zweite Lage der Schutzabdeckung auch parallel zu und in einem festgelegten Abstand von zumindest einem Rand, vorzugsweise zumindest einem Längsrand, der Dichtungs- bzw. Isolierbahn durch Perforation oder Prägung oder Einarbeitung eines Fadens geschwächt und dadurch in mehreren Teilabschnitten von der ersten Lage abziehbar ausgeführt sein.

Auch diese Maßnahmen, die vom Erfinder in ähnlicher Weise, d.h. im Zusammenhang mit Selbstklebebahnen mit zugehörigen, allerdings einlagigen Schutzabdeckungen der Selbstklebefläche, bereits in seinem österreichischen Patent AT 409.153 offenbart wurden, erleichtern das Verlegen beträchtlich.

In einem zweiten Aspekt betrifft die Erfindung Herstellungsverfahren für die eben beschriebenen, erfindungsgemäß mit mehrlagiger Schutzabdeckung versehenen Isolier- bzw. Dichtungsbahnen, nach denen auf eine handelsübliche Isolier- bzw. Dichtungsbahn mit zumindest einer ungeschützten Klebefläche eine derartige mehrlagige Schutzabdeckung so aufgebracht wird, dass die Klebefläche durch die Schutzabdeckung zumindest teilweise, vorzugsweise aber zur Gänze abgedeckt wird.

Auch in diesem Aspekt ist natürlich von essentieller Bedeutung, dass die Haftkraft der auf der Klebefläche aufliegenden ersten Lage an der Isolier- bzw. Dichtungsbahn größer ist als jene zwischen erster und zweiter Lage der Schutzabdeckung, um letztere Lage bei Verwendung von der auf der Bahn zurückbleibenden ersten Lage abziehen zu können. Dies kann wiederum durch bloße Adhäsion oder aber durch Kleber bewerkstelligt werden.

Als Materialien für die beiden Lagen können die bereits oben erwähnten Kunststoffe, Papier, Stoffe oder Vliesmaterialien eingesetzt werden, und die in den erfindungsgemäßen Verfahren gegebenenfalls eingesetzten Kleber sind ebenfalls wie bereits zuvor beschrieben.

Das Aufbringen erfolgt in bevorzugten Ausführungsformen so, dass:
a) die Schutzabdeckung einen oder beide Längsränder der Bahn überragt, vorzugsweise um zumindest 5 mm, noch bevorzugter um zumindest 10 bis 20 mm, um einen Rand der Schutzabdeckung leicht fassen und die beiden Lagen voneinander trennen zu können; und/oder
b) die erste Lage der Schutzabdeckung im Wesentlichen bündig mit den Rändern der Dichtungs- bzw. Isolierbahn abschließend aufgebracht wird und die zweite Lage über zumindest einen Längsrand hinausragend aufgebracht wird, was die Trennung der Lagen erleichtert; und/oder
c) die zweite Lage um 50 bis 200 mm, vorzugsweise 80 bis 120 mm, insbesondere etwa 100 mm, überstehend aufgebracht wird, um mit dem so gebildeten Überstand einen freiliegenden Abschnitt der ersten Lage einer anderen Bahn beim Verlegen vorübergehend schützen zu können; und/oder
d) zumindest ein Abschnitt der ersten Lage der Schutzabdeckung, vorzugsweise zumindest ein Abschnitt an zumindest einem Rand, insbesondere entlang eines Längsrands, der Dichtungs- bzw. Isolierbahn, nicht von der zweiten Lage bedeckt wird, um die Notwendigkeit des teilweisen Abziehens der zweiten, oberen Lage der Schutzabdeckung beim Verlegen zu vermeiden; und/oder
e) die beiden Lagen der Schutzabdeckung in Breiterichtung zueinander versetzt aufgebracht werden, so dass ein Abschnitt der ersten Lage entlang eines Längsrands der Dichtungs- bzw. Isolierbahn nicht von der zweiten Lage bedeckt wird, während die zweite Lage am gegenüberliegenden Längsrand der Dichtungs- bzw. Isolierbahn über diesen hinausragend aufgebracht wird, um eine Kombination der Vorteile der Merkmale c) und d) bereitzustellen.

Der Vorgang des Aufbringens der Schutzabdeckung kann in einem oder in mehreren Verfahrensschritten erfolgen. In einem Schritt wird sie beispielsweise aufgebracht, wenn die Schutzabdeckung aus zwei coextrudierten Kunststofflagen besteht, die entweder als solche im Handel bezogen oder aber in situ hergestellt, d.h. coextrudiert wird. Die Herbeiführung der Haftung zwischen der unteren, ersten Lage und der Klebefläche wird im Aufbringschritt vorzugsweise mittels Aufwalzen der Schutzabdeckung durchgeführt.

Wird dafür ein Kleber verwendet, ist in der Fertigungsstraße vor der Station zum Aufbringen der Schutzabdeckung entweder eine weitere Station zur Vorbeschichtung der Dichtungs- bzw. Isolierbahn mit diesem Kleber vorgesehen, oder die Schutzabdeckung wird an der Unterseite der ersten Lage mit dem Kleber beschichtet (z.B. durch Aufstreichen oder Führen der Schutzabdeckung über eine kleberbeschichtete Walze) und danach in einer der zuvor beschriebenen Arten auf die Bahn aufgebracht, vorzugsweise aufgewalzt.

In alternativen Ausführungsformen erfolgt das Aufbringen der mehrlagigen Schutzabdeckung in zwei aufeinander folgenden Verfahrensschritten an zwei von der zu schützenden Dichtungs- bzw. Isolierbahn in einer Fertigungsstraße nacheinander passierten Aufbringstationen. Es versteht sich, dass dabei zuerst die untere, erste Lage der Schutzabdeckung auf die Klebefläche der Bahn und danach die zweite, abziehbare Lage aufgebracht werden.

Die Aufbringung der ersten Lage kann auf zwei Arten erfolgen. Einerseits kann eine im Handel erstandene Folie, mit oder ohne vorhergehende(r) Aufbringung eines Klebers auf die Folie oder die Klebefläche, auf die Bahn aufgezogen, vorzugsweise aufgewalzt, werden.

Andererseits kann jedoch die erste Lage, wenn es sich um eine Kunststoffschicht handelt, auch direkt auf der Klebefläche der Dichtungs- bzw. Isolierbahn in situ erzeugt werden. Dazu wird eine härtbare Polymerzusammensetzung auf die Klebefläche aufgebracht, z.B. aufgestrichen oder aufgegossen, und mittels Rakel oder Walzen auf die gewünschte Breite eingestellt. Die Polymerzusammensetzung enthält ungesättigte Monomere, gegebenenfalls zusammen mit einem oder mehreren Comonomeren, üblicherweise einen Härter und gegebenenfalls ein Lösungsmittel für das System.

Wird ein Lösungsmittel verwendet, so sollte selbiges eines sein, das die Oberfläche des Bitumens nicht beeinträchtigt, d.h. nicht oder nur in geringem Maße anlöst, und das keine Gefahr für die Umwelt darstellt. Ein geringes Maß an Anlösen oder Aufquellen der Bitumenoberfläche kann insofern erwünscht sein, als dadurch für eine festere Verbindung zwischen dem in situ gebildeten Polymer, z.B. Polyethylen oder Polypropylen, und der Klebefläche gesorgt wird, wodurch beispielsweise ein Kleber zwischen den beiden Lagen der Schutzabdeckung umso eher entfallen kann.

Vorzugsweise wird monomeres Ethylen und/oder Propylen ohne Verwendung eines Lösungsmittels zusammen mit einem Härter eingesetzt. Die (Masse-)Polymerisation wird vorzugsweise bei niedrigen Temperaturen, z.B. bei Raumtemperatur, durchgeführt, um die Klebefläche nicht vorzeitig zu aktivieren. Wiederum kann in manchen Fällen jedoch ein geringfügiges Erweichen oder Anschmelzen des Bitumens erwünscht sein, um für eine festere Verbindung mit dem in situ gebildeten Polymer zu sorgen.

Der Härter ist vorzugsweise ein für das jeweilige (Co-)Polymerisationssystem geeigneter UV-Photoinitiator, z.B. auf Basis von Benzophenonen, Benzilketalen oder Thioxanthonen, und die härtbare Polymerzusammensetzung wird in bevorzugten Ausführungsformen in einer in der Fertigungsstraße zwischen den beiden Aufbringstationen vorgesehenen Belichtungsstation mit UV-Strahlung, z.B. mittels üblicher Quecksilberdampflampen, vorzugsweise bei Raumtemperatur, gehärtet. Die Belichtungszeit hängt u.a. von Faktoren wie dem jeweiligen Polymerisationssystem, der Dicke der Schicht, der Temperatur und der verwendeten Lampen ab, beträgt jedoch üblicherweise zwischen 10 s und 10 min, vorzugsweise 30 s bis 5 min, noch bevorzugter 1 bis 2 min.

Nach derartiger In-situ-Herstellung der ersten Lage direkt auf der zu schützenden Klebefläche wird die zweite Lage aufgebracht, wobei gegebenenfalls, wenn auch nicht bevorzugterweise, ein Kleber eingesetzt wird. Der Kleber kann speziell in solchen Fällen entfallen, wo die Oberfläche des als erste Lage in situ gebildeten Polymers noch ausreichende Klebrigkeit aufweist. Diese ist durch die Polymerisationsbedingungen (Temperatur, Lösungsmittel, Konzentration, Härter, Belichtungszeit etc.) steuerbar, darf jedoch nicht übermäßig hoch sein, um keine zu feste Bindung zwischen den beiden Lagen herzustellen, damit die obere Lage bei Verwendung problemlos abziehbar bleibt.

Das Aufbringen der zweiten Lage erfolgt wiederum vorzugsweise so, dass sie über den oder die Längsrand/-ränder der Bahn hinausragt. Wie leicht zu erkennen ist, kann in allen Ausführungsformen unter In-situ-Polymerisation der ersten Lage nur eine der beiden Lagen (nämlich die zweite) der Schutzabdeckung überstehend aufgebracht werden, was jedoch ausreicht, um selbige bei Verwendung leicht von der darunter liegenden ersten Lage abziehen zu können. Wiederum können unterschiedlich breite Überstände der zweiten Lage gewählt werden, um die oben erwähnten Vorteile zu erzielen.

Schließlich kann in bestimmten Ausführungsformen die zweite Lage - während des Aufbringens oder aber in einem gesonderten Verfahrensschritt - parallel zu und in einem festgelegten Abstand von zumindest einem Rand, vorzugsweise zumindest einem Längsrand, der Dichtungs- bzw. Isolierbahn durch Perforation oder Prägung oder Einarbeitung eines Fadens geschwächt und dadurch in mehreren Teilabschnitten von der ersten Lage abziehbar gemacht werden, was wiederum das Verlegen erleichtert. Der festgelegte Abstand entspricht selbstredend der breite der beim Verlegen gewünschten Überlappung, d.h. 50 bis 200, vorzugsweise 80 bis 120, insbesondere etwa 100, mm.

Gemäß besonders bevorzugten Ausführungsformen der vorliegenden Erfindung wird die erste Lage - gesondert oder zusammen mit der zweiten Lage (je nachdem, ob das Aufbringen in einer oder in zwei Stufe erfolgt) - ohne Verwendung eines Klebers zwischen der ersten Lage und der zu schützenden Klebefläche direkt auf das (Polymer-)Bitumen der Dichtungs- bzw. Isolierbahn aufgebracht, während das Bitumen in einem Zustand erhöhter Temperatur gehalten wird.

Dieser Zustand kann herbeigeführt werden, indem die Bitumenbahn nach ihrer Herstellung eigens erhitzt wird, oder aber, indem die Aufbringung der ersten Lage (oder beider Lagen) der Schutzabdeckung unmittelbar nach der Herstellung der Bitumenbahn erfolgt, solange das zu diesem Zweck erhitzte Bitumen noch in heißem Zustand vorliegt. Letztere Variante wird bevorzugt.

Aufgrund dieser Maßnahme wird eine intensive, feste Haftung der ersten Lage der Schutzabdeckung auf der Klebefläche erzielt, ohne dass ein Kleber vonnöten wäre, wodurch die zweite Lage beim Verlegen leicht von der ersten abziehbar ist, ohne die erste Lage teilweise oder gar zur Gänze mitabzulösen.

Durch die vorliegende Erfindung werden somit Lösungen für das eingangs beschriebene Problem der Kontamination und Beschädigung von Klebeflächen von Dichtungs- und Isolierbahnen während des Verlegens derselben bereitgestellt, die unter geringem Material- und apparatetechnischem Aufwand realisiert werden können und die somit kostengünstige, verbesserte Alternativen zu den Dichtungs- und Isolierbahnen nach dem Stand der Technik darstellen.

## Patentansprüche

1. Dichtungs- bzw. Isolierbahn aus Bitumen, insbesondere zur Dachabdeckung und Verkleidung von Kelleraußenwänden, mit zumindest einer auf zumindest einem Teil einer der Oberflächen der Bahn vorgesehenen Bitumen-Klebefläche, wobei die zumindest eine Klebefläche zumindest teilweise mit einer Schutzabdeckung für die Bitumenoberfläche versehen ist,
**dadurch gekennzeichnet, dass** die Schutzabdeckung in Form von zwei aneinander haftenden, durch Abziehen voneinander trennbaren horizontalen Lagen ausgeführt ist, wobei die auf der Klebefläche aufliegende erste Lage eine höhere Haftkraft an der Klebefläche als an der von der Klebefläche abgewandten zweiten Lage der Schutzabdeckung aufweist.

2. Dichtungs- bzw. Isolierbahn nach Anspruch 1, **dadurch gekennzeichnet, dass** die Haftung zwischen der ersten Lage und der Klebefläche sowie zwischen der ersten Lage und der zweiten Lage durch materialbedingte Adhäsion und/oder durch einen dazwischenliegenden Kleber gegeben ist.

3. Dichtungs- bzw. Isolierbahn nach Anspruch 1 oder 2, **dadurch gekennzeichnet, dass** die Schutzabdeckung aus einem Laminat zweier Lagen aus Kunststoff, Papier, Stoff und/oder Vliesmaterial besteht.

4. Dichtungs- bzw. Isolierbahn nach einem der Ansprüche 1 bis 3, **dadurch gekennzeichnet, dass** die erste Lage aus schmelzbarem Kunststoff, wie z.B. Polyethylen oder Polypropylen, besteht.

5. Dichtungs- bzw. Isolierbahn nach einem der vorangegangenen Ansprüche, **dadurch gekennzeichnet, dass** die Schutzabdeckung aus zwei coextrudierten Kunststofffolien besteht.

6. Dichtungs- bzw. Isolierbahn nach einem der vorangegangenen Ansprüche, **dadurch gekennzeichnet, dass** die Schutzabdeckung über zumindest einen längsseitigen Rand, vorzugsweise beide längsseitigen Ränder, der Dichtungs- bzw. Isolierbahn hinausragt.

7. Dichtungs- bzw. Isolierbahn nach Anspruch 6, **dadurch gekennzeichnet, dass** die Schutzabdeckung um zumindest 5 mm, vorzugsweise zumindest 10 bis 20 mm, übersteht.

8. Dichtungs- bzw. Isolierbahn nach Anspruch 6 oder 7, **dadurch gekennzeichnet, dass** die erste Lage an beiden Längsrändern der Dichtungs- bzw. Isolierbahn mit selbiger im Wesentlichen bündig abschließt, während die zweite Lage darüber hinausragt.

9. Dichtungs- bzw. Isolierbahn nach Anspruch 8, **dadurch gekennzeichnet, dass** die zweite Lage um 50 bis 200 mm, vorzugsweise 80 bis 120 mm, insbesondere etwa 100 mm, übersteht.

10. Dichtungs- bzw. Isolierbahn nach einem der vorangegangenen Ansprüche, **dadurch gekennzeichnet, dass** zumindest ein Abschnitt der ersten Lage der Schutzabdeckung, vorzugsweise zumindest ein Abschnitt an zumindest einem Rand der Dichtungs- bzw. Isolierbahn, nicht von der zweiten Lage bedeckt ist.

11. Dichtungs- bzw. Isolierbahn nach Anspruch 10, **dadurch gekennzeichnet, dass** zumindest ein Abschnitt der ersten Lage entlang eines Längsrands der Dichtungs- bzw. Isolierbahn nicht von der zweiten Lage bedeckt ist.

12. Dichtungs- bzw. Isolierbahn nach einem der Ansprüche 6 bis 11, **dadurch gekennzeichnet, dass** die beiden Lagen der Schutzabdeckung in Breiterichtung zueinander versetzt sind, so dass ein Abschnitt der ersten Lage entlang eines Längsrands der Dichtungs- bzw. Isolierbahn nicht von der zweiten Lage bedeckt ist, während die zweite Lage am gegenüberliegenden Längsrand der Dichtungs- bzw. Isolierbahn über diesen hinausragt.

13. Dichtungs- bzw. Isolierbahn nach einem der vorangegangenen Ansprüche, **dadurch gekennzeichnet, dass** die zweite Lage der Schutzabdeckung parallel zu und in einem festgelegten Abstand von zumindest einem Rand, vorzugsweise zumindest einem Längsrand, der Dichtungs- bzw. Isolierbahn durch Perforation oder Prägung oder Einarbeitung eines Fadens geschwächt und **dadurch** in mehreren Teilabschnitten von der ersten Lage abziehbar ist.

14. Verfahren zur Herstellung einer Dichtungs- bzw. Isolierbahn, **gekennzeichnet durch** das Aufbringen einer mehrlagigen Schutzabdeckung auf eine Dichtungs- bzw. Isolierbahn aus (Polymer-)Bitumen mit zumindest einer auf zumindest einem Teil einer der Oberflächen der Bahn vorgesehenen Klebefläche, wobei die zumindest eine Klebefläche **durch** die aufzubringende Schutzabdeckung zumindest teilweise, vorzugsweise zur Gänze, abgedeckt wird.

15. Verfahren nach Anspruch 14, **dadurch gekennzeichnet, dass** eine mehrlagige Schutzabdeckung aus zwei aneinander haftenden, durch Abziehen voneinander trennbaren horizontalen Lagen aufgebracht wird, wobei die auf der Klebefläche aufliegende erste Lage eine höhere Haftkraft an der Klebefläche als an der von der Klebefläche abgewandten zweiten Lage der Schutzabdeckung aufweist.

16. Verfahren nach Anspruch 14 oder 15, **dadurch gekennzeichnet, dass** die Haftung zwischen der ersten Lage und der Klebefläche sowie zwischen der ersten Lage und der zweiten Lage durch materialbedingte Adhäsion und/oder durch einen dazwischenliegenden Kleber herbeigeführt wird.

17. Verfahren nach einem der Ansprüche 14 bis 16, **dadurch gekennzeichnet, dass** eine Schutzabdeckung aus einem Laminat zweier Lagen aus Kunststoff, Papier und/oder Stoff aufgebracht wird.

18. Verfahren nach einem der Ansprüche 14 bis 17, **dadurch gekennzeichnet, dass** die erste Lage aus schmelzbarem Kunststoff, wie z.B. Polyethylen oder Polypropylen, besteht.

19. Verfahren nach einem der Ansprüche 14 bis 18, **dadurch gekennzeichnet, dass** die mehrlagige Schutzabdeckung über zumindest einen längsseitigen Rand, vorzugsweise beide längsseitigen Ränder, der Dichtungs- bzw. Isolierbahn hinausragend aufgebracht wird.

20. Verfahren nach Anspruch 19, **dadurch gekennzeichnet, dass** die mehrlagige Schutzabdeckung um zumindest 5 mm, vorzugsweise um zumindest 10 bis 20 mm, über den zumindest einen Längsrand hinausragend aufgebracht wird.

21. Verfahren nach Anspruch 19 oder 20, **dadurch gekennzeichnet, dass** die erste Lage der Schutzabdeckung im Wesentlichen bündig mit den Rändern der Dichtungs- bzw Isolierbahn abschließend aufgebracht wird und die zweite Lage über zumindest einen Längsrand hinausragend aufgebracht wird.

22. Verfahren nach einem der Ansprüche 19 bis 21, **dadurch gekennzeichnet, dass** die zweite Lage um 50 bis 200 mm, vorzugsweise 80 bis 120 mm, insbesondere etwa 100 mm, überstehend aufgebracht wird.

23. Verfahren nach einem der Ansprüche 14 bis 22, **dadurch gekennzeichnet, dass** zumindest ein Abschnitt der ersten Lage der Schutzabdeckung, vorzugsweise zumindest ein Abschnitt an zumindest einem Rand, insbesondere entlang eines Längsrands, der Dichtungs- bzw. Isolierbahn, nicht von der zweiten Lage bedeckt wird.

24. Verfahren nach einem der Ansprüche 19 bis 23, **dadurch gekennzeichnet, dass** die beiden Lagen der Schutzabdeckung in Breiterichtung zueinander versetzt aufgebracht werden, so dass ein Abschnitt der ersten Lage entlang eines Längsrands der Dichtungs- bzw. Isolierbahn nicht von der zweiten Lage bedeckt wird, während die zweite Lage am gegenüberliegenden Längsrand der Dichtungs- bzw. Isolierbahn über diesen hinausragend aufgebracht wird.

25. Verfahren nach einem der Ansprüche 14 bis 24, **dadurch gekennzeichnet, dass** das Aufbringen der mehrlagigen Schutzabdeckung in zwei aufeinander folgenden Verfahrensschritten an zwei von der zu schützenden Dichtungs- bzw. Isolierbahn in einer Fertigungsstraße nacheinander passierten Aufbringstationen erfolgt.

26. Verfahren nach einem der Ansprüche 14 bis 24, **dadurch gekennzeichnet, dass** die mehrlagige Schutzabdeckung durch Coextrusion zweier Kunststofffolien in situ hergestellt und anschließend in einer einzigen Aufbringstation aufgebracht wird.

27. Verfahren nach einem der Ansprüche 14 bis 26, **dadurch gekennzeichnet, dass** das Aufbringen mittels Aufwalzen erfolgt.

28. Verfahren nach Anspruch 25, **dadurch gekennzeichnet, dass** in der ersten Aufbringstation eine härtbare Polymerzusammensetzung aufgebracht wird, die in einer danach vorgesehenen Härtungsstation zur ersten Lage gehärtet wird, wonach in der zweiten Aufbringstation die zweite Lage auf die erste Lage aufgebracht, vorzugsweise aufgewalzt, wird.

29. Verfahren nach Anspruch 28, **dadurch gekennzeichnet, dass** die härtbare Polymerzusammensetzung in einer in der Fertigungsstraße zwischen den beiden Aufbringstationen vorgesehenen Belichtungsstation mittels UV-Strahlung gehärtet wird.

30. Verfahren nach einem der Ansprüche 14 bis 29, **dadurch gekennzeichnet, dass** die zweite Lage der Schutzabdeckung parallel zu und in einem festgelegten Abstand von zumindest einem Rand, vorzugsweise zumindest einem Längsrand, der Dichtungs- bzw. Isolierbahn durch Perforation oder Prägung oder Einarbeitung eines Fadens geschwächt und **dadurch** in mehreren Teilabschnitten von der ersten Lage abziehbar gemacht wird.

31. Verfahren nach einem der Ansprüche 14 bis 30, **dadurch gekennzeichnet, dass** die erste Lage - gesondert oder zusammen mit der zweiten Lage - ohne Verwendung eines Klebers zwischen der ersten Lage und der zu schützenden Klebefläche direkt auf das (Polymer-)Bitumen der Dichtungs- bzw. Isolierbahn aufgebracht wird, während das Bitumen in einem Zustand erhöhter Temperatur gehalten wird.

## Claims

1. A sealing and/or insulating sheet made of bitumen, particularly for covering roofs and lining the external walls of cellars, having at least one adhesive bitumen surface provided on at least part of one of the faces of said sheet, said at least one adhesive bitumen surface being at least partly provided with a protective covering for the bitumen surface,
**characterized in that** said protective covering is embodied as two horizontal layers adhering to each other and being separable by pulling off one from the other, the first layer which lies on the adhesive surface exhibiting higher adhesive strength to said adhesive surface than to the second layer of said protective covering which faces away from said adhesive surface.

2. The sealing and/or insulating sheet according to claim 1, **characterized in that** adhesion between said first layer and said adhesive surface as well as between said first layer and said second layer is brought about by adhesiveness inherent to the material and/or by an interposed bonding agent.

3. The sealing and/or insulating sheet according to claim 1 or claim 2, **characterized in that** said protective covering is made of a laminate consisting of two layers of plastics, paper, cloth and/or non-woven fabric material.

4. The sealing and/or insulating sheet according to any one of claims 1 to 3, **characterized in that** said first layer is made of meltable plastics such as polyethylene or polypropylene.

5. The sealing and/or insulating sheet according to any one of the preceding claims, **characterized in that** said protective covering consists of two co-extruded plastic foils.

6. The sealing and/or insulating sheet according to any one of the preceding claims, **characterized in that** said protective covering extends beyond at least one longitudinal edge, preferably beyond both longitudinal edges, of said sealing and/or insulating sheet.

7. The sealing and/or insulating sheet according to claim 6, **characterized in that** said protective covering projects by at least 5 mm, preferably by at least 10 to 20 mm.

8. The sealing and/or insulating sheet according to claim 6 or claim 7, **characterized in that** said first layer is substantially flush with said sealing and/or insulating sheet at both longitudinal edges thereof, while said second layer extends beyond it.

9. The sealing and/or insulating sheet according to claim 8, **characterized in that** said second layer projects by 50 to 200 mm, preferably by 80 to 120 mm, and particularly by approximately 100 mm.

10. The sealing and/or insulating sheet according to any one of the preceding claims, **characterized in that** at least a portion of said first layer of said protective covering, preferably at least a portion on at least one edge, is not covered by said second layer.

11. The sealing and/or insulating sheet according to claim 10, **characterized in that** at least a portion of said first layer along one longitudinal edge of said sealing and/or insulating sheet is not covered by said second layer.

12. The sealing and/or insulating sheet according to any one of claims 6 to 11, **characterized in that** both layers of said protective covering are mutually offset in the transversal direction, so that a portion of said first layer along one longitudinal edge of said sealing and/or insulating sheet is not covered by said second layer, while said second layer projects beyond the opposite longitudinal edge of said sealing and/or insulating sheet.

13. The sealing and/or insulating sheet according to any one of the preceding claims, **characterized in that** said second layer of said protective covering is weakened by perforation or stamping or by incorporation of a thread in parallel with and at a fixed distance from at least one edge, preferably at least one longitudinal edge, of said sealing and/or insulating sheet, so that it can be pulled off said first layer in form of several individual parts.

14. A method of producing a sealing and/or insulating sheet, **characterized by** the application of a multi-layer protective covering onto a sealing and/or insulating sheet made of (polymer) bitumen having at least one adhesive surface provided on at least part of one of the faces of said sheet, said at least one adhesive surface being covered at least partially, preferably entirely, by said protective covering to be applied.

15. The method according to claim 14, **characterized in that** a multi-layer protective covering, consisting of two horizontal layers adhering to each another and being separable from one another by pulling off one from the other, is applied, the first layer which lies on the adhesive surface exhibiting higher adhesive strength to said adhesive surface than to the second layer of said protective covering which faces away from said adhesive surface.

16. The method according to claim 14 or claim 15, **characterized in that** adhesion between said first layer and said adhesive surface as well as between said first layer and said second layer is brought about by adhesiveness inherent to the material and/or by an interposed bonding agent.

17. The method according to any one of claims 14 to 16, **characterized in that** a protective covering made of a laminate consisting of two layers of plastics, paper and/or cloth is applied.

18. The method according to any one of claims 14 to 17, **characterized in that** said first layer is made of meltable plastics such as polyethylene or polypropylene.

19. The method according to any one claims 14 to 18, **characterized in that** said multi-layer protective covering is applied extending beyond at least one longitudinal edge, preferably beyond both longitudinal edges, of said sealing and/or insulating sheet.

20. The method according to claim 19, **characterized in that** said multi-layer protective covering is applied extending beyond said at least one longitudinal edge by at least 5 mm, preferably by at least 10 to 20 mm.

21. The method according to claim 19 or claim 20, **characterized in that** said first layer is applied substantially flush with the edges of said sealing and/or insulating sheet, and said second layer is applied extending beyond at least one longitudinal edge.

22. The method according to any one of claims 19 to 21, **characterized in that** said second layer is applied projecting by 50 to 200 mm, preferably by 80 to 120 mm, and particularly by approximately 100 mm.

23. The method according to any one of claims 14 to 22, **characterized in that** at least a portion of said first layer of said protective covering, preferably at least a portion on at least one edge, particularly along a longitudinal edge, of said sealing and/or insulating sheet is not covered by said second layer.

24. The method according to any one of claims 19 to 23, **characterized in that** both layers of said protective covering are applied mutually offset in the widthwise direction, so a portion of said first layer along one longitudinal edge of said sealing and/or insulating sheet is not covered by said second layer, while said second layer is applied projecting beyond the opposite longitudinal edge of said sealing and/or insulating sheet.

25. The method according to any one of claims 14 to 24, **characterized in that** application of said multi-layer protective covering is effected in two successive process steps at two application stations which said sealing and/or insulating sheet to be protected successively passes by in a production line.

26. The method according to any one of claims 14 to 24, **characterized in that** said multi-layer protective covering is formed in situ by co-extruding two plastic foils and is subsequently applied at a single application station.

27. The method according to any one of claims 14 to 26, **characterized in that** application is effected using rolls.

28. The method according to claim 25, **characterized in that**, at the first application station, a curable polymer composition is applied which is then cured at a subsequent curing station in order to obtain said first layer, whereupon said second layer is applied onto said first layer, preferably using rolls, at the second application station.

29. The method according to claim 28, **characterized in that** said curable polymer composition is cured at an exposure station, provided on said production line between the two application stations, using ultraviolet radiation.

30. The method according to any one of claims 14 to 29, **characterized in that** said second layer of said protective covering is weakened by perforating or stamping or by incorporating a thread in parallel with and at a fixed distance from at least one edge, preferably at least one longitudinal edge, of said sealing and/or insulating sheet, whereby it is arranged to be pulled off said first layer in form of several individual parts.

31. The method according to any one of claims 14 to 30, **characterized in that** said first layer is directly applied, either separately or together with said second layer, onto the (polymer) bitumen of said sealing and/or insulating sheet while the bitumen is kept in a state of elevated temperature, without using any bonding agent between said first layer and said adhesive surface to be protected.

## Revendications

1. Bande d'étanchéité et/ou d'isolation en bitume, en particulier pour la couverture des toits et le revêtement des parois extérieures de cave, avec au moins une surface en bitume adhésive prévue au moins sur une partie de l'une des faces de la bande, l'au moins une surface adhésive étant pourvue au moins partiellement d'un revêtement de protection pour la surface en bitume,
**caractérisée en ce que** le revêtement de protection est effectué sous forme de deux couches horizontales adhérentes l'une à l'autre et séparables en pelant l'une de l'autre, la première couche qui repose sur la surface adhésive ayant une plus forte adhérence sur la surface adhésive que sur la deuxième couche du revêtement de protection qui est détournée de la surface adhésive.

2. Bande d'étanchéité et/ou d'isolation selon la revendication 1, **caractérisée en ce que** l'adhérence entre la première couche et la surface adhésive ainsi qu'entre la première couche et la deuxième couche est conditionnée par l'adhésion inhérente au matériel et/ou par l'usage d'une colle y interposée.

3. Bande d'étanchéité et/ou d'isolation selon l'une quelconque des revendications 1 et 2, **caractérisée en ce que** le revêtement de protection se compose d'un aggloméré laminé de deux couches en matière plastique, papier, étoffe et/ou matériel non-tissé.

4. Bande d'étanchéité et/ou d'isolation selon l'une quelconque des revendications 1 à 3, **caractérisée en ce que** la première couche du revêtement de protection se compose d'une matière plastique fusible tel que le polyéthylène ou le polypropylène.

5. Bande d'étanchéité et/ou d'isolation selon l'une quelconque des revendications précédentes, **caractérisée en ce que** le revêtement de protection se compose de deux feuilles coextrudées en matière plastique.

6. Bande d'étanchéité et/ou d'isolation selon l'une quelconque des revendications précédentes, **caractérisée en ce que** le revêtement de protection fait saillie au moins sur un bord longitudinal, préférablement sur les deux bords longitudinaux, de la bande d'étanchéité et/ou d'isolation.

7. Bande d'étanchéité et/ou d'isolation selon la revendication 6, **caractérisée en ce que** le revêtement de protection fait saillie d'au moins 5 mm, de préférence d'au moins 10 à 20 mm.

8. Bande d'étanchéité et/ou d'isolation selon l'une quelconque des revendications 6 et 7, **caractérisée en ce que** la première couche coïncide sensiblement avec la bande d'étanchéité et/ou d'isolation aux deux bords longitudinaux de celle-ci, tandis que la deuxième couche fait saillie sur celle-ci.

9. Bande d'étanchéité et/ou d'isolation selon la revendication 8, **caractérisée en ce que** la deuxième couche fait saillie de 50 à 200 mm, de préférence de 80 à 120 mm, en particulier de 100 mm environ.

10. Bande d'étanchéité et/ou d'isolation selon l'une quelconque des revendications précédentes, **caractérisée en ce qu'**au moins une partie de la première couche du revêtement de protection, de préférence au moins une partie à au moins un bord de la bande d'étanchéité et/ou d'isolation, n'est pas couverte par la deuxième couche.

11. Bande d'étanchéité et/ou d'isolation selon la revendication 10, **caractérisée en ce qu'**au moins une partie de la première couche n'est pas couverte par la deuxième couche le long d'un bord longitudinal de la bande d'étanchéité et/ou d'isolation.

12. Bande d'étanchéité et/ou d'isolation selon l'une quelconque des revendications 6 à 11, **caractérisée en ce que** les deux couches du revêtement de protection sont déplacées l'une par rapport à l'autre dans la direction transversale de sorte qu'une partie de la première couche n'est pas couverte par la deuxième couche le long d'un bord longitudinal de la bande d'étanchéité et/ou d'isolation, tandis que la deuxième couche fait saillie sur le bord longitudinal opposé de la bande d'étanchéité et/ou d'isolation.

13. Bande d'étanchéité et/ou d'isolation selon l'une quelconque des revendications précédentes, **caractérisée en ce que** la deuxième couche du revêtement de protection est affaiblie par perforation ou estampage ou bien par l'incorporation d'un fil parallèlement à, et à une distance déterminée de, au moins un bord, de préférence au moins un bord longitudinal, de la bande d'étanchéité et/ou d'isolation, et est ainsi pelable de la première couche en plusieurs parties.

14. Procédé de fabrication d'une bande d'étanchéité et/ou d'isolation, **caractérisé par** l'application d'un revêtement de protection multicouche sur une bande d'étanchéité et/ou d'isolation en bitume (polymère) avec au moins une surface adhésive prévue au moins sur une partie de l'une des faces de la bande, la surface adhésive étant couverte au moins partiellement, de préférence entièrement, du revêtement de protection à appliquer.

15. Procédé selon la revendication 14, **caractérisé en ce qu'**un revêtement de protection multicouche, composé de deux couches horizontales adhérentes l'une à l'autre et séparables en pelant l'une de l'autre, est appliqué, la première couche qui repose sur la surface adhésive ayant une plus forte adhérence sur la surface adhésive que sur la deuxième couche du revêtement de protection qui est détournée de la surface adhésive.

16. Procédé selon l'une quelconque des revendications 14 et 15, **caractérisé en ce que** l'adhérence entre la première couche et la surface adhésive ainsi qu'entre la première couche et la deuxième couche est conditionnée par l'adhésion inhérente au matériel et/ou par l'usage d'une colle y interposée.

17. Procédé selon l'une quelconque des revendications 14 à 16, **caractérisé en ce qu'**un revêtement de protection composé d'un aggloméré laminé de deux couches en matière plastique, papier et/ou étoffe est appliqué.

18. Procédé selon l'une quelconque des revendications 14 à 17, **caractérisé en ce que** la première couche se compose d'une matière plastique fusible tel que le polyéthylène ou le polypropylène.

19. Procédé selon l'une quelconque des revendications 14 à 18, **caractérisé en ce que** le revêtement de protection multicouche est appliqué faisant saillie au moins sur un bord longitudinal, préférablement sur les deux bords longitudinaux, de la bande d'étanchéité et/ou d'isolation.

20. Procédé selon la revendication 19, **caractérisé en ce que** le revêtement de protection multicouche est appliqué faisant saillie sur l'au moins un bord longitudinal d'au moins 5 mm, de préférence d'au moins 10 à 20 mm.

21. Procédé selon l'une quelconque des revendications 19 et 20, **caractérisé en ce que** la première couche du revêtement de protection est appliquée coïncidant sensiblement avec les bords de la bande d'étanchéité et/ou d'isolation et que la deuxième couche est appliqué faisant saillie au moins sur un bord longitudinal.

22. Procédé selon l'une quelconque des revendications 19 à 21, **caractérisé en ce que** la deuxième couche est appliquée faisant saillie de 50 à 200 mm, de préférence de 80 à 120 mm, en particulier de 100 mm environ.

23. Procédé selon l'une quelconque des revendications 14 à 22, **caractérisé en ce qu'**au moins une partie de la première couche du revêtement de protection, de préférence au moins une partie à au moins un bord, en particulier le long d'un bord longitudinal de la bande d'étanchéité et/ou d'isolation, n'est pas couverte par la deuxième couche.

24. Procédé selon l'une quelconque des revendications 19 à 23, **caractérisé en ce que** les deux couches du revêtement de protection sont appliquées déplacées l'une par rapport à l'autre dans la direction transversale de sorte qu'une partie de la première couche n'est pas couverte pas par la deuxième couche le long d'un bord longitudinal de la bande d'étanchéité et/ou d'isolation, tandis que la deuxième couche est appliquée faisant saillie sur le bord longitudinal opposé de la bande d'étanchéité et/ou d'isolation.

25. Procédé selon l'une quelconque des revendications 14 à 24, **caractérisé par** l'application du revêtement de protection multicouche dans deux étapes de procédé successives auprès de deux stations d'application que la bande d'étanchéité et/ou d'isolation passe successivement dans une chaîne de fabrication.

26. Procédé selon l'une quelconque des revendications 14 à 24, **caractérisé en ce que** le revêtement de protection multicouche est fabriqué in situ par la coextrusion de deux feuilles en matière plastique et ensuite appliqué auprès d'une seule station d'application.

27. Procédé selon l'une quelconque des revendications 14 à 26, **caractérisé en ce que** l'application est effectuée à l'aide de rouleaux.

28. Procédé selon la revendication 25, **caractérisé en ce qu'**une composition polymère durcissable est appliquée auprès de la première station d'application et durcie auprès d'une station de durcissage prévue ci-après, après quoi la deuxième couche est appliquée sur la première couche, de préférence à l'aide de rouleaux, auprès de la deuxième station d'application.

29. Procédé selon la revendication 28, **caractérisé en ce que** la composition polymère durcissable est durcie par rayonnement ultraviolet auprès d'une station d'exposition prévue entre les deux stations d'application dans une chaîne de fabrication.

30. Procédé selon l'une quelconque des revendications 14 à 29, **caractérisé en ce que** la deuxième couche du revêtement de protection est affaiblie par perforation ou estampage ou bien par l'incorporation d'un fil parallèlement à, et à une distance déterminée de, au moins un bord, de préférence au moins un bord longitudinal, de la bande d'étanchéité et/ou d'isolation, et est ainsi rendue pelable de la première couche sous forme de plusieurs parties.

31. Procédé selon l'une quelconque des revendications 14 à 30, **caractérisé en ce que** la première couche est appliquée directement - soit séparément, soit ensemble avec la deuxième couche - sur le bitume (polymère) de la bande d'étanchéité et/ou d'isolation en tenant le bitume dans un état de température élevée, sans l'usage d'une colle entre la première couche et la surface adhésive à protéger.
